# EUROPEAN PATENT SPECIFICATION

(11) **EP 1 542 537 B1**
(45) Date of publication and mention of the grant of the patent: **25.02.2009**
(21) Application number: 03747750.2
(22) Date of filing: 24.09.2003
(51) Int. Cl.: A21B 3/13

(54) **COMPOUND FOOD RECIPIENT**
VERBUNDBEHÄLTER FÜR NAHRUNGSMITTEL
RECIPIENT COMBINE POUR ALIMENTS

(30) Priority: 24.09.2002 BE 200200556
(43) Date of publication of application: 22.06.2005
(73) Proprietor: Clean Baking Products, Besloten Vennootschap met Beperkte Aansprakelijkheid, 2070 Zwijndrecht (BE)
(72) Inventor: VAN DEN BROECK, Ivan, B-2960 Brecht (BE); HIEL, Clement, Florimond, Josephine, Rancho Palos Verdes, LA-90275 (US)
(74) Representative: Donné, Eddy
(86) International application number: PCT/BE2003/000159
(87) International publication number: WO 2004/028257

(56) References cited:
- EP-A- 0 801 899
- DE-U- 7 321 895
- GB-A- 1 001 420
- US-A- 1 470 273
- US-A- 2 407 021
- US-A- 2 615 592
- US-A- 5 692 431

## Description

The present invention concerns a compound food recipient, in particular a food recipient of the type which is composed of two or several individual plastic containers for food, in particular baking tins fixed to a common frame.

Such compound food recipients can be used in bakeries for baking bread and pastry, in industrial kitchens for preparing and freezing portions of food, etcetera.

An advantage of such compound food recipients is that several loaves, pastries, portions of food or the like can be treated simultaneously, for example in order to store them, to put them in an oven or a freezing device or to remove them from it, which makes it possible to save valuable time.

Such compound food recipients are already known whereby the plastic holders are provided with protruding parts with which they are fixed to the common metal frame by means of rivets, spot welding or the like.

A disadvantage of these known food recipients is that the plastic holders are provided in a fixed and immobile manner to the common frame, so that the holders, especially when they are intensively used, start to show cracks and fissures after a relatively short time due to the tensions that are created during the heating or cooling as a result of the uneven expansion or shrinkage of the plastic holders and the metal frame.

Another disadvantage is that the damaged holders are very difficult to replace individually without the use of professional tools, so that it is usually the supplier who has to take care of the repair or replacement of a holder, so that such a repair is usually expensive and the user also has to do without the damaged food recipient for a while, so that he necessarily has to build up some reserve, which is of course expensive and moreover requires some storage space.

From EP 0.801.899 a food recipient is disclosed which comprises several metal containers that are fixed in a metal frame by means of a releasable clamping device that is intended to hold the holders firmly in said frame.

Although the holders can be replaced in a relatively easy manner in this case, such a design of food recipient is not suited for use with plastic holders instead of metallic holders, since the holders are still firmly fixed and immobilised on the frame with the known disadvantages as explained above of premature cracking as a result.

The present invention aims to remedy the above-mentioned and other disadvantages.

To this aim, the invention concerns a compound food recipient of the type which is composed of two or several plastic holders for food provided in a common frame, whereby this frame is formed of two mainly similar shaped frames which are connected to each other with clamps and whereby the aforesaid holders are provided with laterally protruding lips on their side walls which are placed between the aforesaid frames with a certain play.

An advantage of such a compound food recipient according to the invention is that the holders, thanks to the aforesaid play, can freely expand and shrink in relation to each other, so that, when used in an oven, freezer or the like, no unwanted tensions can arise due to the different expansion of the holders and frames, so that any possible cracks and fissures resulting thereof can be avoided.

The aforesaid frames are preferably connected to each other in a detachable manner by means of clamps or the like, so that the frames can easily be detached from one another and can also be easily fixed to each other again, such that the replacement of one or several holders can easily be done by the user itself.

In order to better explain the characteristics of the invention, the following preferred embodiments of a compound food recipient according to the invention are described as an example only without being limitative in any way, with reference to the accompanying drawings, in which:
figure 1 represents a compound food recipient according to the invention in perspective;
figure 2 represents a section according to line II-II in figure 1;
figure 3 represents the part indicated by F3 in figure 1 to a larger scale;
figure 4 represents a section according to line IV-IV in figure 3;
figure 5 represents a section as in figure 4, but for another position;
figures 6 and 7 are variants of the embodiment from figure 1;
figure 8 represents a variant of a compound food recipient according to the invention;
figures 9 and 10 represent variants of embodiments of figure 8;
figure 11 represents another variant of an embodiment of a compound food recipient according to the invention.

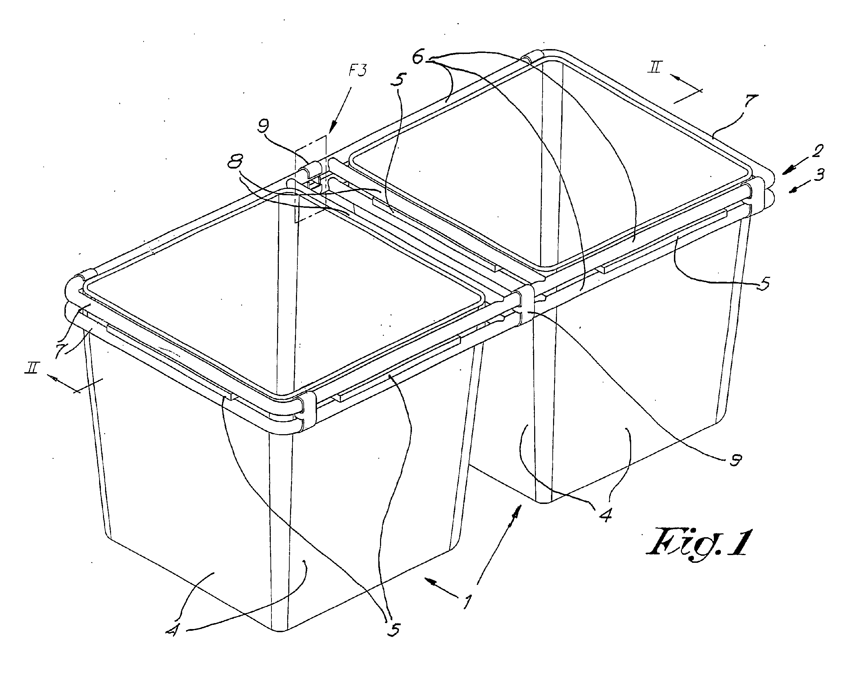

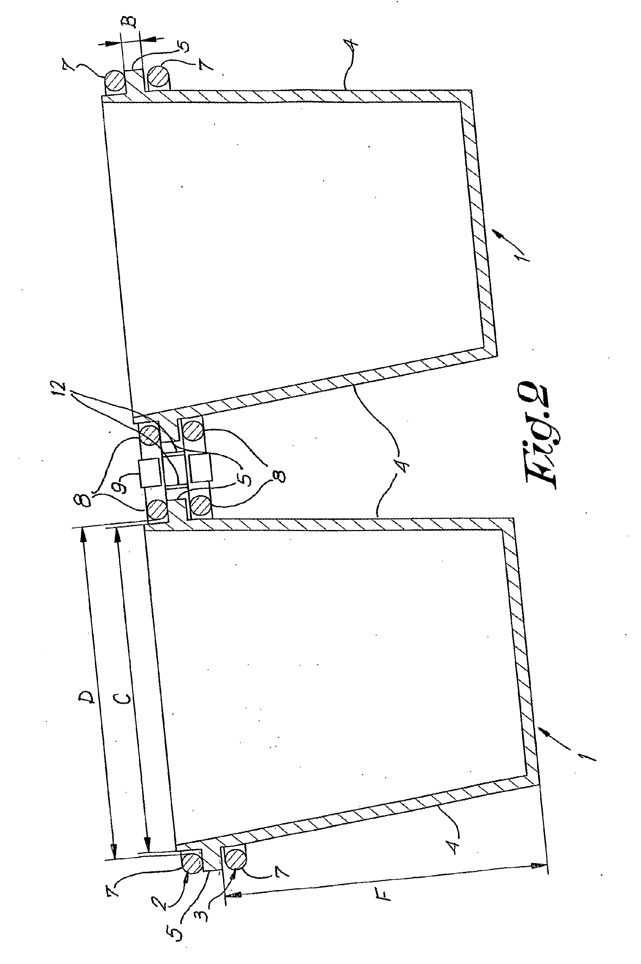

Figures 1 and 2 represent a compound food recipient which mainly consists of two plastic holders 1 for food provided in a common frame which consists of two horizontal frames which are mainly similar in shape, 2 and 3 respectively, made of metal, composite material or the like, situated on top of each other and at a distance from each other.

The holders 1 are square in this case and they are provided with laterally protruding lips 5 on their side walls 4 inserted between the aforesaid frames 2-3.

The frames 2-3 have a threaded structure and they are in this case made rectangular with edges 6-7 formed of filamentary or rod-shaped material, whereby cross connections 8 made of the same material are provided on the long sides of the frames 2-3 which divide these frames 2-3 in two square sections in which the above-mentioned square holders 1 are inserted.

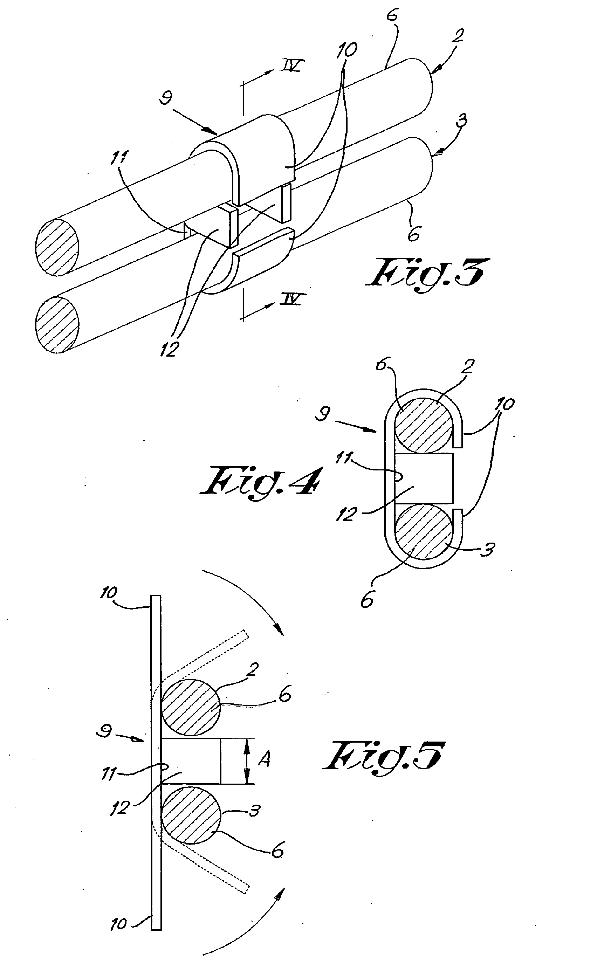

The frames 2-3, as represented in greater detail in figures 3 to 5, are connected to each other by means of clamps 9 made of pliable material, for example metal, whereby these clamps 9 consist of a lattice body folded with its far ends 10 over the edges 5 of both frames 2-3.

On the sides 11 of the aforesaid clamps 9 turned towards the inside are provided spacer sleeves situated between the frames 2-3 and which are formed of two parallel, vertical protrusions 12 standing at right angles to the aforesaid side 11.

It is clear that the spacer sleeves between the frames can also be realised in other ways by elements of any shape whatsoever situated between the frames 2-3 and which must not necessarily be provided on the clamps 9.

The shapes and dimensions of the compound food recipient are selected such according to the invention that the holders 1 have a certain play in relation to the frames 2-3.

A vertical play is obtained on the one hand as the distance between the frames 2-3, which is determined by the height A of the protrusions 12, is larger than the thickness B of the lips 5 of the holders 1.

A horizontal play is obtained on the other hand as the inside dimensions of the frames 2-3 are larger than the outside dimensions of the holders 1 at the height of these frames 2-3.

In the example of figures 1 and 2, what it comes down to is that for example the width C of the holders 1 at the height of the frames 2-3 is smaller than the distance D between an edge 7 and a cross connection 8, and thus is also smaller than the same distance D between two opposite edges 6 of the frames 2-3.

Thanks to the aforesaid vertical and horizontal play, the holders 1 and the frames 2-3 can freely expand and shrink in relation to each other.

This offers the advantage that when a compound food recipient according to the invention is used for preparing or freezing food, no unwanted tensions can arise due to the difference in expansion of the holders 1 and the frames 2-3 and that, consequently, there will be no cracks or fissures in the holders 1.

Thanks to the stiffness of the frames 2-3, the holders 1 are well supported laterally, such that the original shape of the holders 1 is well maintained at higher temperatures since the side walls 4 can bulge less as the plastic becomes more flexible at said high temperatures.

The frames 2-3 can be detached from each other in a very simple manner by folding the far ends 10 of the clamps 9 open.

The clamps 9 can also be provided again in a very simple manner, as is schematically represented in figure 5, by placing the clamp 9 concerned against the frames 3 with the aforesaid protrusions 12 clamped in between, and by subsequently folding the far ends 10 by means of pliers or the like over the edges 6 and/or 7 of the frames 2-3 until the protrusions 12 are firmly clamped between the frames 2-3 to thus realise a tight connection.

As the clamps 9 can be easily removed and provided without any special tools being required, the holders 1 can be easily replaced individually or collectively without calling in the supplier or the manufacturer.

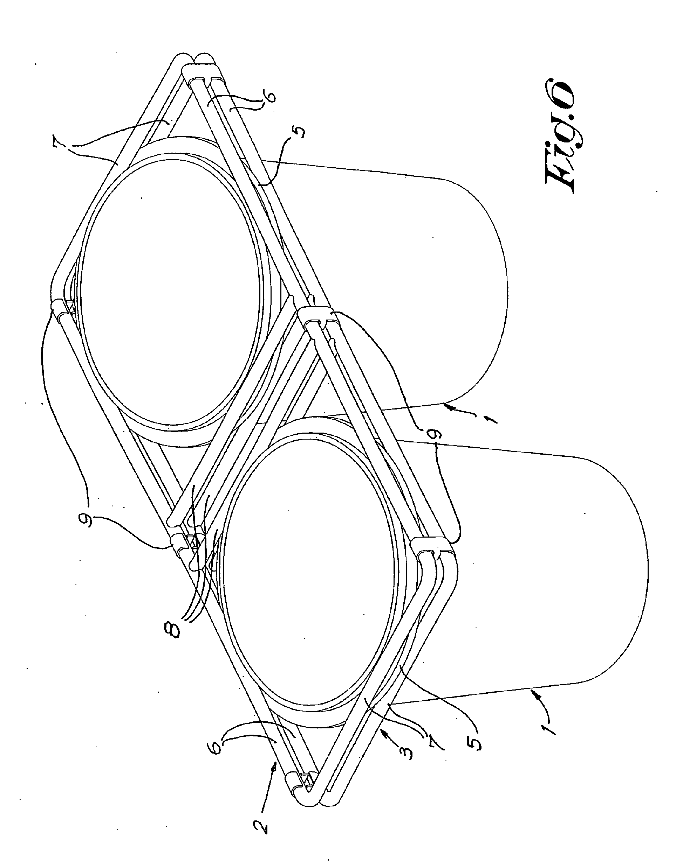

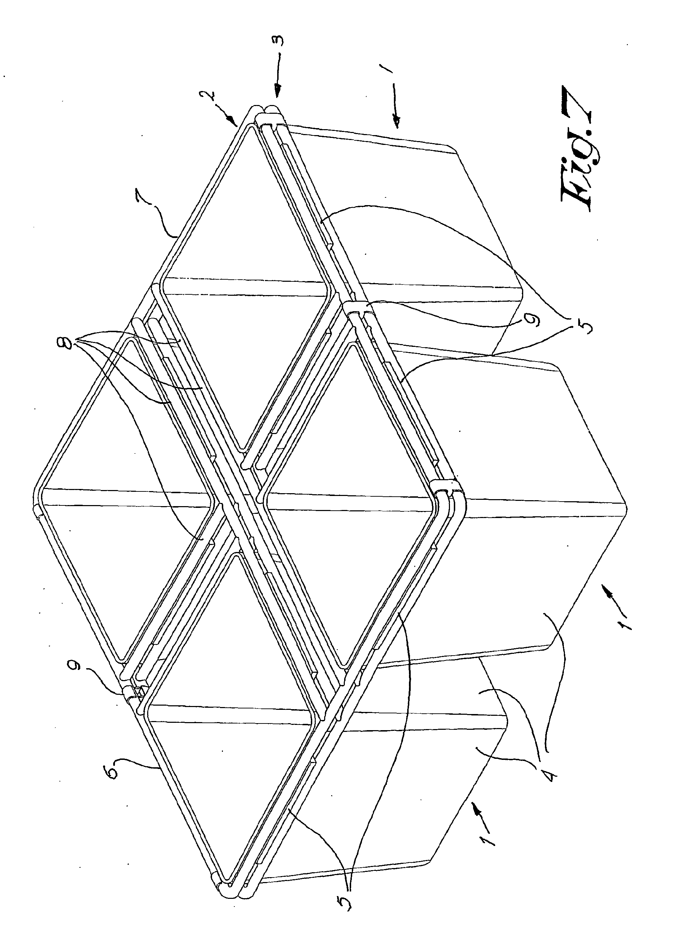

Figures 6 and 7 represent two variants of an embodiment, whereby round holders 1 are applied in the case of figure 6 and four holders 1 in the case of figure 7.

It is clear that in these cases also, the holders 1 are provided in the frames 2-3 with a certain play in order to obtain that the holders 1 can freely expand and shrink in relation to the frames 2-3.

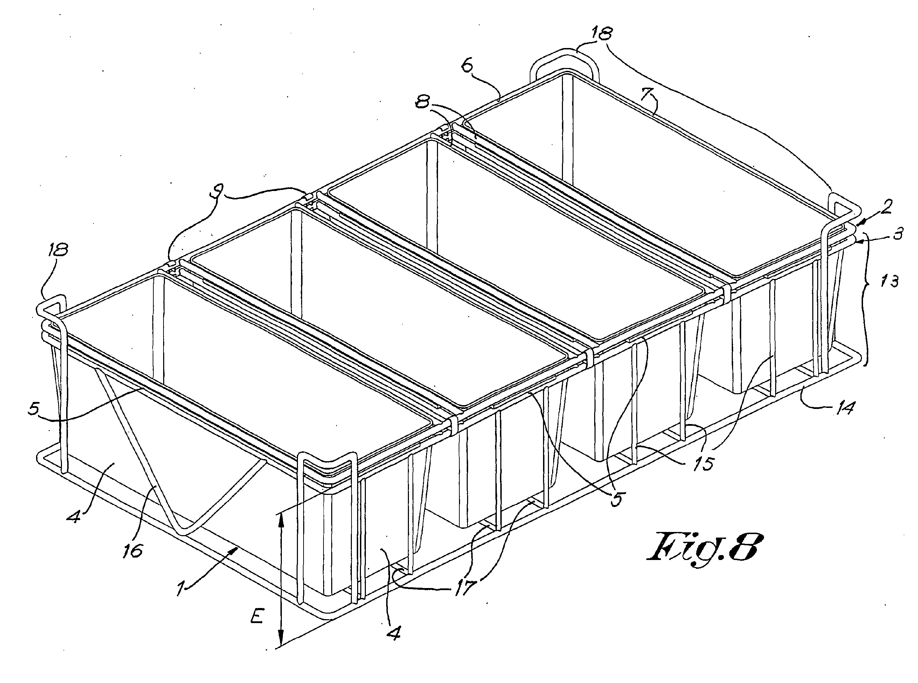

Figure 8 represents another variant of the embodiment of a compound food recipient according to the invention, whereby the lower frame 3 in this case is part of a basket 13 with a threaded structure made of metal or the like, whose bottom is formed of an additional frame 14 which is similar to the aforesaid lower frame 3 and which is connected to it, for example by means of vertical connections 15 and V-shaped reinforcements 16.

Thanks to the basket 13, the holders 1 are in this case better protected against external shocks and knocks, which contributes to a longer life of the food recipient.

The height E of the basket 13 is in this case larger than the height F of the holders 1 measured under the lips 5, such that the holders 1 are freely suspended, so that for example when applied in a hot-air oven, the hot air can also freely circulate at the bottom.

With this latter model of a compound food recipient it is also possible to safely stack several compound food recipients upon each other, whereby the basket 13 of a compound food recipient concerned rests on the top frame 2 of an underlying food recipient. In order to prevent the thus stacked food recipients from shifting in relation to each other, the baskets 13 are in this case preferably provided with upward protruding corner elements 18 at the angles, in between which the basket 13 of a food recipient piled on top fits.

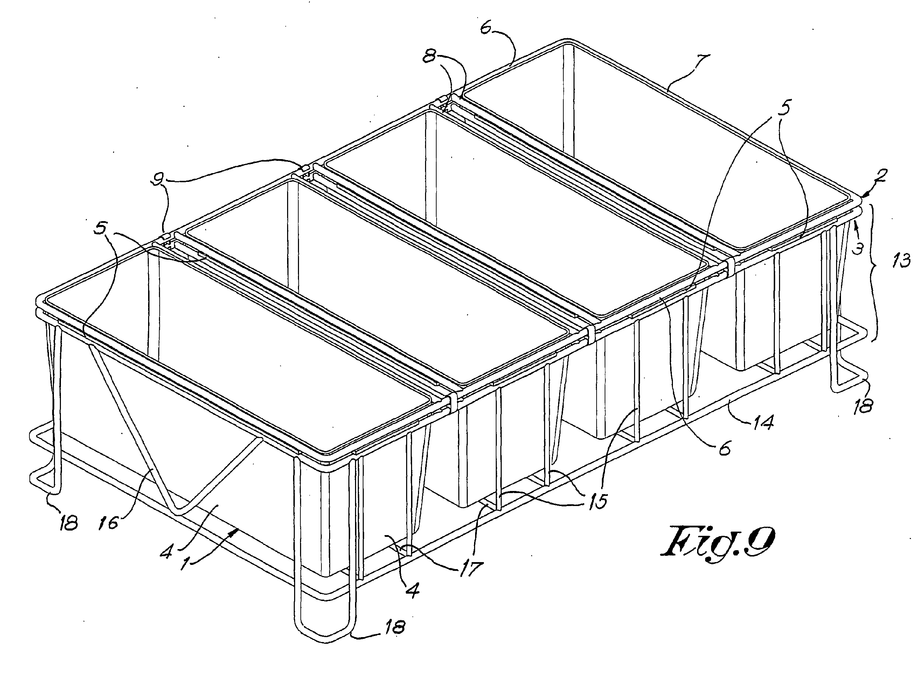

Figure 9 represents a variant whereby the corner elements 18 protrude downward instead of upward.

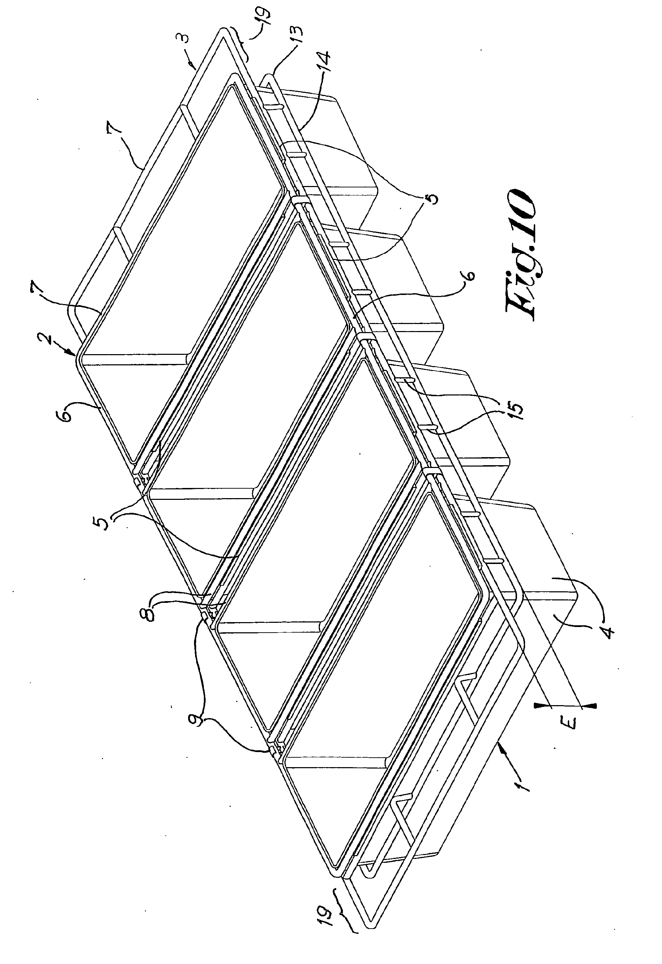

Figure 10 represents a hanging model of a compound food recipient according to the invention, whereby this model is provided with a basket 13 whose height E is in this case smaller than the aforesaid height F of the holders 1 and whereby the lower frame 3 is provided with two laterally protruding parts 19, with which the food recipient can be suspended, for example between horizontal supports of a conveyor cart, stacking rack, oven, freezing chamber or the like.

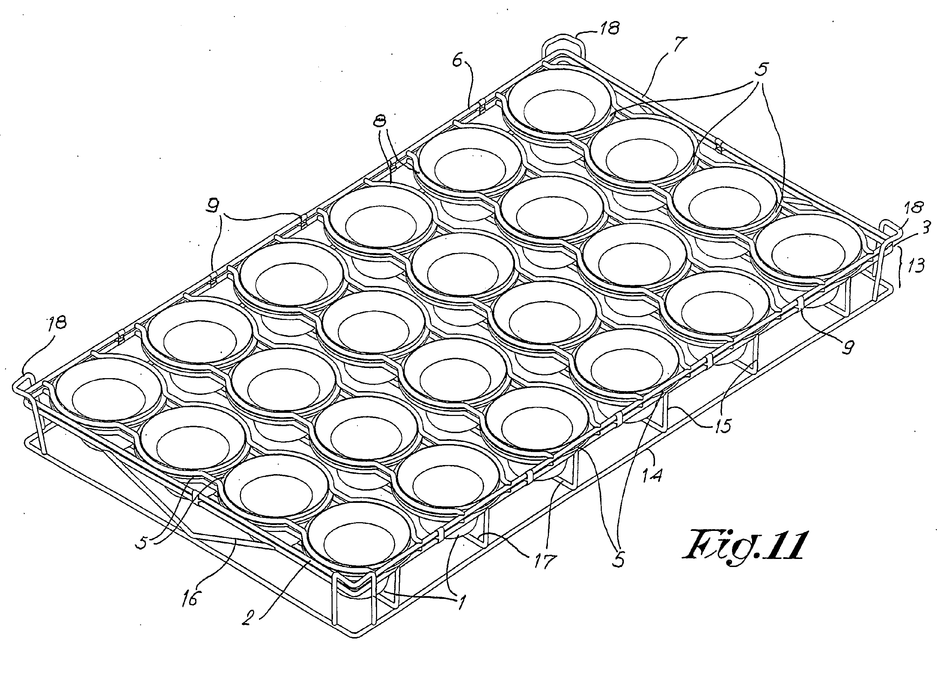

Figure 11 represents a variant of a compound food recipient which is specifically designed for the preparation of small pastries.

## Claims

1. Compound food recipient of the type which is composed of two or several plastic holders (1) for food provided in a common frame formed of two frames (2, 3), whereby the aforesaid holders (1) are provided with laterally protruding lips (5) on their side walls (4) which are placed between the aforesaid frames (2-3) with a certain play **characterised in that** said frames (23) are mainly similar in shape and which are connected to each other with clamps.

2. Compound food recipient according to claim 1, **characterised in that** the frames (2-3) are connected to each other in a detachable manner.

3. Compound food recipient according to claim 2, **characterised in that** the far ends are of clamps (9) folded over the edges (6-7) of the frames (2-3).

4. Compound food recipient according to any of the preceding claims, **characterised in that** spacer sleeves are provided between the frames (2-3).

5. Compound food recipient according to claim 4, **characterised in that** the spacer sleeves are formed of vertical protrusions (12) provided on the aforesaid clamps (9).

6. Compound food recipient according to claim 4 or 5, **characterised in that** the height (A) of the aforesaid spacer sleeves is larger than the thickness (B) of the lips (5) of the holders (1).

7. Compound food recipient according to any of the preceding claims, **characterised in that** the inside dimensions of the frames (2-3) are larger than the outside dimensions of the holders (1) at the height of these frames (2-3).

8. Compound food recipient according to any of the preceding claims, **characterised in that** at least one frame (2-3) is part of a basket (13).

9. Compound food recipient according to claim 8, **characterised in that** the aforesaid basket (13) is at least formed of the lower basket (3) and of an additional frame (14) which is similar in shape and which is connected to the aforesaid lower frame (3).

10. Compound food recipient according to claim 8 or 9, **characterised in that** the height (E) of the basket (13) is larger than the height (F) of the holders (1) under the lips (5).

11. Compound food recipient according to claim 8 or 9, **characterised in that** the height (E) of the basket (13) is smaller than the height (F) of the holders (1) under the lips (5).

12. Compound food recipient according to any of claims 8 to 11, **characterised in that** the basket (13) is provided with laterally protruding parts (19).

13. Compound food recipient according to any of claims 8 to 12, **characterised in that** the frames (2-3) and the basket (13) have a threaded structure.

14. Compound food recipient according to any of claims 8 to 13, **characterised in that** the frames (2-3) and the basket (13) are made of metal.

15. Compound food recipient according to any of claims 8 to 13, **characterised in that** the frames (2-3) and the basket (13) are made of composite material.

## Patentansprüche

1. Kombinierter Lebensmittelbehälter des Typs, der aus zwei oder mehr Kunststoffaufnahmebehältern (1) für Lebensmittel besteht, die in einem gemeinsamen, aus zwei Rahmen (2, 3) gebildeten Rahmen angebracht sind, wobei die vorgenannten Aufnahmebehälter (1) an ihren Seitenwänden (4) mit seitlich vorragenden Lippen (5) versehen sind, die mit einem gewissen Spiel zwischen die vorgenannten Rahmen (2-3) plaziert sind, **dadurch gekennzeichnet, dass** besagte Rahmen (2, 3) im Wesentlichen von gleichartiger Form sind und mit Klammern miteinander verbunden sind.

2. Kombinierter Lebensmittelbehälter nach Anspruch 1, **dadurch gekennzeichnet, dass** die Rahmen (2-3) lösbar miteinander verbunden sind.

3. Kombinierter Lebensmittelbehälter nach Anspruch 2, **dadurch gekennzeichnet, dass** die Enden der Klammern (9) über die Ränder (6-7) der Rahmen (2-3) umgebogen sind.

4. Kombinierter Lebensmittelbehälter nach einem der vorgenannten Ansprüche, **dadurch gekennzeichnet, dass** Abstandhalter zwischen den Rahmen (2-3) angebracht sind.

5. Kombinierter Lebensmittelbehälter nach Anspruch 4, **dadurch gekennzeichnet, dass** die Abstandhalter durch vertikale Vorsprünge (12) gebildet werden, die an den vorgenannten Klammern (9) vorgesehen sind.

6. Kombinierter Lebensmittelbehälter nach Anspruch 4 oder 5, **dadurch gekennzeichnet, dass** die Höhe (A) der vorgenannten Abstandhalter größer als die Dicke (B) der Lippen (5) der Aufnahmebehälter (1) ist.

7. Kombinierter Lebensmittelbehälter nach einem der vorgenannten Ansprüche, **dadurch gekennzeichnet, dass** die Innenabmessungen der Rahmen (2-3) größer als die Außenabmessungen der Aufnahmebehälter (1) in Höhe dieser Rahmen (2-3) sind.

8. Kombinierter Lebensmittelbehälter nach einem der vorgenannten Ansprüche, **dadurch gekennzeichnet, dass** mindestens ein Rahmen (2-3) Teil eines Korbs (13) ist.

9. Kombinierter Lebensmittelbehälter nach Anspruch 8, **dadurch gekennzeichnet, dass** der vorgenannte Korb (13) mindestens aus dem unteren Rahmen (3) und aus einem zusätzlichen Rahmen (14) gebildet ist, der von gleichartiger Form ist und der mit dem vorgenannten unteren Rahmen (3) verbunden ist.

10. Kombinierter Lebensmittelbehälter nach Anspruch 8 oder 9, **dadurch gekennzeichnet, dass** die Höhe (E) des Korbs (13) größer als die Höhe (F) der Aufnahmebehälter (1) unter den Lippen (5) ist.

11. Kombinierter Lebensmittelbehälter nach Anspruch 8 oder 9, **dadurch gekennzeichnet, dass** die Höhe (E) des Korbs (13) kleiner als die Höhe (F) der Aufnahmebehälter (1) unter den Lippen (5) ist.

12. Kombinierter Lebensmittelbehälter nach einem der Ansprüche 8 bis 11, **dadurch gekennzeichnet, dass** der Korb (13) mit seitlich vorragenden Teilen (19) versehen ist.

13. Kombinierter Lebensmittelbehälter nach einem der Ansprüche 8 bis 12, **dadurch gekennzeichnet, dass** die Rahmen (2-3) und der Korb (13) eine Drahtstruktur besitzen.

14. Kombinierter Lebensmittelbehälter nach einem der Ansprüche 8 bis 13, **dadurch gekennzeichnet, dass** die Rahmen (2-3) und der Korb (13) aus Metall hergestellt sind.

15. Kombinierter Lebensmittelbehälter nach einem der Ansprüche 8 bis 13, **dadurch gekennzeichnet, dass** die Rahmen (2-3) und der Korb (13) aus Verbundmaterial hergestellt sind.

## Revendications

1. Récipient composé pour aliments du type qui se compose de deux contenants en matière plastique (1) pour aliments ou plus, prévus dans un encadrement commun formé par deux encadrements (2, 3), les contenants susmentionnés (1) étant munis de lèvres (5) faisant saillie en direction latérale sur leurs parois latérales (4), qui viennent se placer entre les encadrements susmentionnés (2-3) avec un certain jeu, **caractérisé en ce que** lesdits encadrements (2, 3) sont de configuration principalement similaire et sont reliés l'un à l'autre avec des pinces.

2. Récipient composé pour aliments selon la revendication 1, **caractérisé en ce que** les encadrements (2-3) sont reliés l'un à l'autre d'une manière amovible.

3. Récipient composé pour aliments selon la revendication 2, **caractérisé en ce que** les extrémités éloignées des pinces (9) sont repliées par-dessus les bords (6-7) des encadrements (2-3).

4. Récipient composé pour aliments selon l'une quelconque des revendications précédentes, **caractérisé en ce qu'**on prévoit des manchons d'écartement entre les encadrements (2-3).

5. Récipient composé pour aliments selon la revendication 4, **caractérisé en ce que** les manchons d'écartement sont réalisés sous la forme de saillies verticales (12) prévues sur les pinces susmentionnées (9) .

6. Récipient composé pour aliments selon la revendication 4 ou 5, **caractérisé en ce que** la hauteur (A) des manchons d'écartement susmentionnés est supérieure à l'épaisseur (B) des lèvres (5) des contenants (1).

7. Récipient composé pour aliments selon l'une quelconque des revendications précédentes, **caractérisé en ce que** les dimensions internes des encadrements (2-3) sont supérieures aux dimensions externes des contenants (1) à hauteur de ces encadrements (2-3).

8. Récipient composé pour aliments selon l'une quelconque des revendications précédentes, **caractérisé en ce qu'**au moins un encadrement (2-3) fait partie d'un panier (13).

9. Récipient composé pour aliments selon la revendication 8, **caractérisé en ce que** le panier susmentionné (13) est au moins constitué du panier inférieur (3) et d'un encadrement supplémentaire (14) qui est de configuration similaire et qui est relié à l'encadrement inférieur susmentionné (3).

10. Récipient composé pour aliments selon la revendication 8 ou 9, **caractérisé en ce que** la hauteur (E) du panier (13) est supérieure à la hauteur (F) des contenants (1) en dessous des lèvres (5).

11. Récipient composé pour aliments selon la revendication 8 ou 9, **caractérisé en ce que** la hauteur (E) du panier (13) est inférieure à la hauteur (F) des contenants (1) en dessous des lèvres (5).

12. Récipient composé pour aliments selon l'une quelconque des revendications 8 à 11, **caractérisé en ce que** le panier (13) est muni de parties (19) faisant saillie latéralement.

13. Récipient composé pour aliments selon l'une quelconque des revendications 8 à 12, **caractérisé en ce que** les encadrements (2-3) et le panier (13) possèdent une structure filetée.

14. Récipient composé pour aliments selon l'une quelconque des revendications 8 à 13, **caractérisé en ce que** les encadrements (2-3) et le panier (13) sont réalisés en métal.

15. Récipient composé pour aliments selon l'une quelconque des revendications 8 à 13, **caractérisé en ce que** les encadrements (2-3) et le panier (13) sont réalisés en un matériau composite.
